# FASCICULE DE BREVET EUROPEEN

(11) **EP 3 064 418 B1**
(45) Date de publication et mention de la délivrance du brevet: **13.06.2018**
(21) Numéro de dépôt: 16155597.4
(22) Date de dépôt: 12.02.2016
(51) Int. Cl.: B62D 65/02, B66D 1/02, B66F 9/06

(54) **CHARIOT DE MANUTENTION**
FÖRDERWAGEN
HANDLING TRUCK

(30) Priorité: 06.03.2015 FR 1551926
(43) Date de publication de la demande: 07.09.2016
(73) Titulaire: PSA Automobiles SA, 78300 Poissy (FR)
(72) Inventeur: JOLIVEAU, Philippe, 35310 CINTRE (FR); GAUTIER, Stéphane, 35480 GUIPRY (FR)
(74) Mandataire: Fosse, Danièle

(56) Documents cités:
- DE-A1-102004 008 506
- DE-U1-202006 018 599
- US-A- 5 862 885
- US-A1- 2010 001 241
- US-B1- 7 008 165

## Description

L'invention a trait à la manutention d'éléments de caisse et plus particulièrement à un chariot de manutention apte à déplacer un élément de caisse.

La caisse d'un véhicule automobile constitue l'ossature du véhicule sur laquelle sont montés divers composants (moteur, boîte de vitesse, ...) et équipements (sièges, vitres, ...).

La caisse d'un véhicule automobile est réalisée par l'assemblage (généralement par soudage) de tôles, corps creux et coques. Les caisses automobiles sont généralement réalisées sur des lignes d'assemblage automatisées où des robots industriels, répartis par poste, assemblent dans un ordre préétabli les différents éléments de la caisse. Un opérateur place généralement les éléments de caisse à assembler sur des postes de chargement, au moyen de divers dispositifs de manutention, les éléments de caisse étant par la suite pris en charge par des robots industriels, afin par exemple d'être positionnés puis fixés sur la caisse en cours de montage.

Dans la suite de cette description, on s'intéressera plus particulièrement à la manutention d'un élément de caisse depuis un conteneur où il a été stocké jusqu'à un poste de chargement où il sera ensuite pris en charge par un robot industriel afin d'être assemblé à d'autres éléments.

On s'intéressera plus particulièrement dans la suite de cette description aux éléments de caisse qui sont difficilement manoeuvrables manuellement, en ce sens que ces éléments de caisse possèdent les caractéristiques techniques suivantes en combinaison:
- masse importante, allant d'une dizaine de kilogrammes jusqu'à quelques dizaines de kilogrammes;
- volume important, en particulier longueur hors tout supérieure à 1 m;
- risque de dégradation lorsque soumis à un choc;
- risque de blessures lors de la manoeuvre, du fait par exemple de la présence de bords tranchants et/ou de portions en saillie.

Parmi ces éléments de caisse répondant aux critères cités ci-dessus, on prendra pour exemple dans la suite de cette description un coté d'habitacle, également appelé côté de caisse.

Sur une ligne d'assemblage dite de côté de caisse, divers éléments de caisse, dont notamment des doublures et des renforts, sont assemblés sur un côté d'habitacle afin de former un côté d'habitacle dit complet qui sera par la suite assemblé, sur un autre poste, sur une caisse en cours de montage comprenant notamment un soubassement et un bloc avant.

A l'heure actuelle, pour approvisionner la ligne d'assemblage de côté de caisse, c'est à dire manutentionner un côté d'habitacle depuis un conteneur où il a été stocké jusqu'à un poste de chargement où il sera pris en charge par un robot industriel afin d'être assemblé avec divers renforts et doublures, on utilise par exemple un palan motorisé monté sur un pont roulant motorisé, ce palan comprenant un crochet sur lequel est monté un outillage spécifique apte à venir se positionner sur un côté d'habitacle.

L'opérateur chargé de réaliser cette opération dispose généralement d'une commande permettant d'actionner indépendamment le palan et le pont roulant.

Ainsi, pour approvisionner la ligne d'assemblage, un opérateur réalise d'une part une étape de prélèvement, et plus précisément l'opérateur déplace l'outillage via le pont roulant et le palan tout en le guidant manuellement de sorte à le positionner sur le côté d'habitacle. D'autre part, après avoir solidarisé le côté d'habitacle sur l'outillage, l'opérateur réalise une étape de transport, et plus précisément l'opérateur dégage le côté d'habitacle du conteneur puis l'achemine en direction du poste de chargement via le pont roulant et le palan, le côté d'habitacle libre de se mouvoir autour du crochet étant guidé manuellement lors de ce transfert par l'opérateur. Enfin, l'opérateur réalise une étape de dépose, et plus précisément l'opérateur positionne le côté d'habitacle sur le poste de chargement via le pont roulant et le palan, celui-ci étant guidé manuellement par l'opérateur.

L'emploi d'un palan motorisé monté sur un pont roulant muni d'un outillage spécifique pour manutentionner un côté d'habitacle ne va pas sans inconvénients.

Premièrement, lors de chaque étape, l'opérateur doit utiliser l'une de ses mains afin d'actionner le palan et/ou le pont roulant via la commande et il doit utiliser l'autre main pour guider le coté d'habitacle et/ou l'outillage. L'opérateur doit ainsi simultanément actionner le palan et/ou le chariot ainsi que guider le coté d'habitacle et/ou l'outillage. Le fait de réaliser deux tâches à la fois oblige l'opérateur à coordonner parfaitement ses actions sous peine de se blesser en raison par exemple d'un contact avec l'élément de caisse et/ou d'endommager l'élément de caisse au travers d'un choc de celui-ci avec un élément extérieur. Les cotés d'habitacle endommagés doivent par la suite être retouchés au détriment de la qualité perçue et de la productivité.

En outre, en raison des contraintes associées à ces différentes étapes ainsi que des dimensions hors tout de l'élément d'habitacle, l'opérateur se trouve dans l'obligation d'avancer lentement afin de manutentionner le côté d'habitacle, au détriment de la productivité. Ce manque de productivité est accru lorsque l'opérateur doit positionner de façon précise le côté d'habitacle sur le poste de chargement.

Enfin, l'emploi d'un pont roulant motorisé au sein d'un atelier nécessite l'implantation d'une structure porteuse, qui peut être soit fixée sur la charpente du l'atelier soit posée au sol, cette implantation impliquant de lourds investissements et limitant fortement d'éventuelles réorganisations de l'espace de travail.

**Le document** US 7 008 165 **propose** un **chariot de manutention comprenant** un **châssis,** un **mécanisme de soulèvement d'une porte grâce à un levier. Le document** DE 10 2004 008506 **propose également** un **dispositif** de **manutention comprenant un châssis portant un système élévateur de prise d'une pièce de carrosserie.**

Un premier objectif est de proposer un dispositif de manutention permettant de déplacer un élément de caisse ayant les caractéristiques techniques suivantes :
- masse importante, allant d'une dizaine de kilogrammes jusqu'à quelques dizaines de kilogrammes;
- volume important, en particulier longueur hors tout supérieure à 1 m;
- risque de dégradation lorsque soumis à un choc;
- risque de blessures lors de la manoeuvre, du fait par exemple de la présence de bords tranchants et/ou de portions en saillie.

Un deuxième objectif est de proposer un dispositif de manutention permettant d'optimiser le temps nécessaire à la manutention de l'élément de caisse.

A cet effet, il est proposé en premier lieu, un chariot de manutention apte à déplacer un élément de caisse comprenant une ouverture primaire délimitée par un encadrement primaire, ce chariot comprenant:
- un châssis sur lequel sont montées au moins une roulette directrice et une roulette fixe ;
- un cadre vertical solidaire du châssis et sensiblement perpendiculaire à celui-ci ;
ce chariot comprenant également:
- un dispositif d'équilibre solidaire du châssis;
- un équipage mobile monté coulissant sur le cadre et relié au dispositif d'équilibre;
l'équipage mobile comprenant :
- des poignées ;
- un support primaire apte à recevoir l'élément de caisse à travers l'encadrement primaire.

Diverses caractéristiques supplémentaires peuvent être prévues, seules ou en combinaison :
- le chariot comprend un support secondaire apte à recevoir l'élément de caisse à travers un encadrement secondaire ;
- le chariot comprend un dispositif de guidage primaire apte à venir coopérer avec un rail primaire ;
- l'équipage mobile est monté coulissant sur le cadre au travers de deux guidages linéaires à billes, chaque guidage linéaire comprenant un rail solidaire du cadre au sein duquel coulisse un patin solidaire de l'équipage mobile ;
- le dispositif d'équilibre comprend un câble ayant une boucle à son extrémité libre, ce câble étant guidé par une poulie et relié à l'équipage mobile via la boucle ;
- le chariot comprend une paire de butoirs positionnés en vis-à-vis sur l'équipage mobile ;
- le chariot comprend un tampon apte à venir en contact avec l'élément de caisse ;
- le dispositif d'équilibre est un équilibreur de charge ou un système de rappel de charge.

D'autres objets et avantages de l'invention apparaîtront à la lumière de la description d'un mode de réalisation, faite ci-après en référence aux dessins annexés dans lesquels :
- la figure 1 est une vue en perspective d'un chariot de manutention déplaçant un élément de caisse ;
- la figure 2 est une vue en perspective du chariot de manutention ;
- la figure 3 est une vue de côté du chariot de manutention ;
- la figure 4 est une vue de dessus du chariot de manutention ;
- la figure 5 est une vue de détail en perspective d'un châssis et d'un cadre du chariot de manutention ;
- la figure 6 est une vue de détail en perspective, éclatée, de la fixation d'une roulette sur le châssis ;
- la figure 7 est une vue de détail en perspective d'un équipage mobile du chariot de manutention ;
- la figure 8 est une vue de détail en perspective, éclatée, de la fixation d'un rail d'un guidage linéaire sur le cadre ;
- la figure 9 est une vue de détail en perspective, éclatée, de la fixation d'un patin du guidage linéaire sur l'équipage mobile ;
- la figure 10 est une vue de détail en perspective, éclatée, de la fixation d'une poulie sur le cadre ;
- la figure 11 est une vue de détail en perspective, éclatée, de la fixation d'un équilibreur de charge sur le châssis ;
- la figure 12 est une vue de détail en perspective, éclatée, d'un dispositif de guidage secondaire ;
- la figure 13 est une vue de détail en perspective, éclatée, d'un dispositif de guidage primaire ;
- la figure 14 est une vue en perspective du chariot apte à prélever un côté d'habitacle stocké au sein d'un conteneur ;
- la figure 15 est une vue de détail en perspective de la coopération entre le dispositif de guidage primaire et un rail primaire ;
- la figure 16 est une vue de détail en perspective du prélèvement du côté d'habitable stocké au sein du conteneur ;
- la figure 17 est une vue de détail en perspective du prélèvement du côté d'habitable stocké au sein du conteneur ;
- la figure 18 est une vue en perspective du chariot apte à déposer un côté d'habitacle sur un poste de chargement ;
- la figure 19 est une vue de détail en perspective de la coopération entre le dispositif de guidage secondaire et un rail secondaire ;
- la figure 20 est une vue de détail en perspective de la dépose du côté d'habitacle sur le poste de chargement ;
- la figure 21 est une vue de détail en perspective de la dépose du côté d'habitacle sur le poste de chargement.

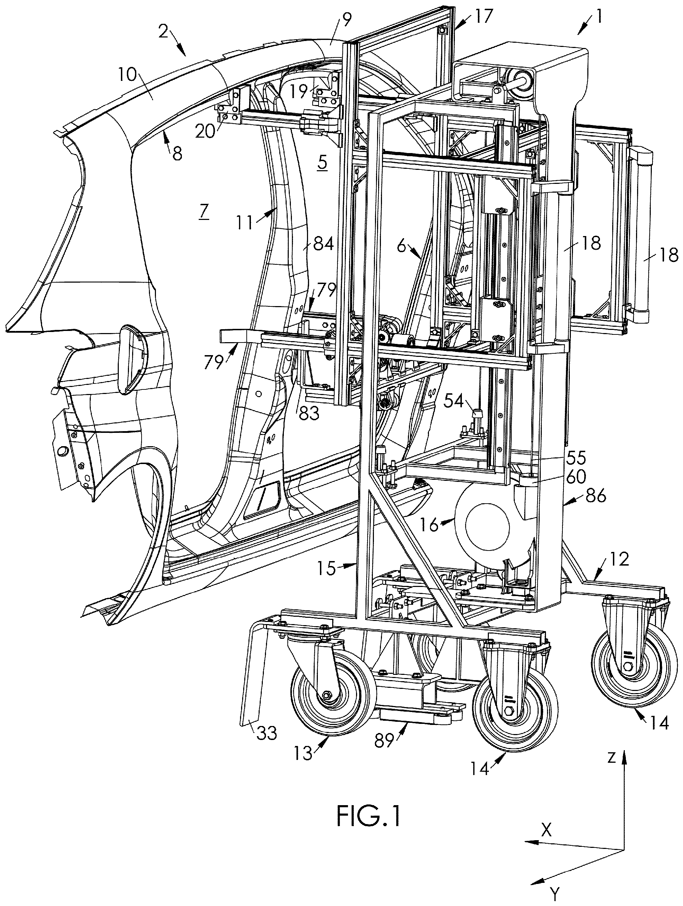

Sur la figure 1 est représenté un chariot 1 de manutention apte à déplacer un élément 2 de caisse, et plus précisément selon l'exemple illustré un côté 2 d'habitacle également appelé côté 2 de caisse, ce côté 2 d'habitacle étant apte à recevoir divers éléments structurels (renforts, doublures...) avant d'être monté sur une caisse en cours de montage.

Selon l'exemple illustré sur les figures, le chariot 1 de manutention est manipulé par un opérateur et utilisé pour déplacer le côté 2 d'habitacle depuis un conteneur 3 où il a été stocké à la suite de sa fabrication jusqu'à un poste 4 de chargement où il sera par exemple pris en charge par différents robots industriels, afin de recevoir différents éléments structurels tels que des renforts et des doublures.

L'exemple illustré n'est en rien limitatif, le chariot 1 de manutention pourrait être utilisé pour manutentionner des outillages ou divers éléments de caisse tels que par exemple un capot, un panneau de porte, un pavillon ou un hayon.

Selon l'exemple illustré sur les figures, le côté 2 d'habitacle comprend d'une part une ouverture 5 primaire délimitée par un encadrement 6 primaire, cette ouverture 5 primaire étant apte à recevoir une porte latérale avant. Le côté 2 d'habitacle comprend d'autre part une ouverture 7 secondaire délimitée par un encadrement 8 secondaire, cette ouverture 7 secondaire étant apte à recevoir une porte latérale arrière. L'encadrement 6 primaire est délimité, dans une portion supérieure, par une limite 9 supérieure correspondant en l'occurrence à un montant de pare-brise ainsi qu'à une partie mineure d'un brancard de pavillon. L'encadrement 8 secondaire est délimité, dans une portion supérieure, par une bordure 10 supérieure correspondant en l'occurrence à une partie majeure du brancard de pavillon. L'encadrement 6 primaire et l'encadrement 8 secondaire sont reliés via un pied 11 central.

On définit par rapport au chariot 1 de manutention un repère orthogonal XYZ comprenant trois axes perpendiculaires deux à deux, à savoir:
- un axe X, définissant une direction longitudinale, horizontale, confondue avec la direction générale de déplacement du chariot 1 de manutention,
- un axe Y, définissant une direction transversale, horizontale, qui avec l'axe X définit un plan XY horizontal,
- un axe Z, définissant une direction verticale, perpendiculaire au plan XY horizontal.

Le chariot 1 de manutention comprend d'une part un châssis 12 sur lequel sont montées au moins une roulette 13 directrice et une roulette 14 fixe, et un cadre 15 vertical solidaire du châssis 12 et sensiblement perpendiculaire à celui-ci. Le chariot 1 comprend en outre un dispositif 16 d'équilibre solidaire du châssis 12 et un équipage 17 mobile monté coulissant sur le cadre 15 et relié au dispositif 16 d'équilibre, cet équipage 17 mobile comprenant des poignées 18 et un support 19 primaire apte à recevoir le côté 2 d'habitacle au travers de l'encadrement 6 primaire.

Plus précisément, selon l'exemple illustré, l'équipage 17 mobile comprend un support 19 primaire et un support 20 secondaire aptes à recevoir respectivement la limite 9 supérieure et la bordure 10 supérieure au travers de l'encadrement 6 primaire et de l'encadrement 8 secondaire.

Par convention, dans la suite de la description, l'avant du chariot 1 est défini comme étant la zone d'interaction entre le côté 2 d'habitacle et le chariot 1 lors de son utilisation, et l'arrière du chariot 1 est défini comme étant la zone d'interaction entre l'opérateur et le chariot 1 lors de son utilisation.

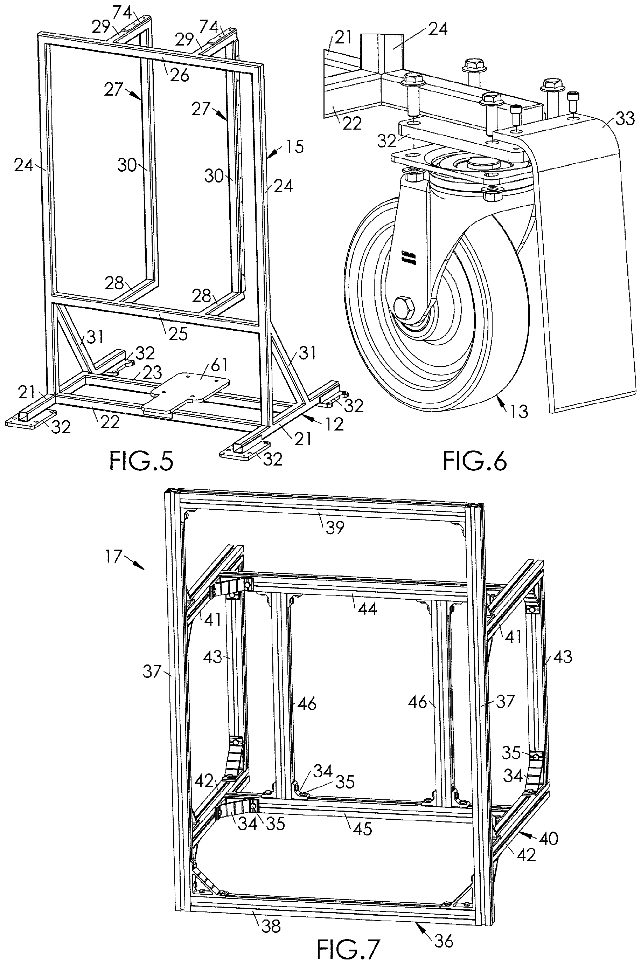

Selon le mode de réalisation illustré sur les figures et notamment sur la figure 5, le châssis 12 et le cadre 15 sont des ensembles mécano-soudés composés de tubes à section carré en acier ou en aluminium.

Plus précisément, le châssis 12 comprend une paire de poutres 21 latérales, ces poutres 21 étant reliées transversalement au travers d'une barre 22 avant et d'une barre 23 arrière sensiblement perpendiculaires aux poutres 21 latérales.

Le cadre 15 comprend une paire de montants 24 sensiblement perpendiculaires au châssis 12, chaque montant 24 faisant saillie d'une poutre 21 et ceux-ci étant reliés transversalement par une traverse 25 inférieure et une traverse 26 supérieure. Le cadre 15 comprend en outre deux ossatures 27 en forme d'anse, sensiblement parallèles, en saillie vers l'arrière du chariot 1, chaque ossature 27 comprenant un doigt 28 inférieur et un doigt 29 supérieur respectivement en saillie de la traverse 25 inférieure et de la traverse 26 supérieure, les doigts 28, 29 étant reliés verticalement par une colonne 30. Le cadre 15 comprend également deux renforts 31, dans sa partie inférieure, chaque renfort 31 reliant respectivement une poutre 21 et un montant 24.

Selon le mode de réalisation illustré sur les figures, le chariot 1 de manutention comprend d'une part une roulette 13 directrice à une extrémité avant de chaque poutre 21 et d'autre part une roulette 14 fixe à une extrémité arrière de chaque poutre 21. Une roulette 14 fixe est en l'occurrence mobile autour d'un unique axe transversal tandis qu'une roulette 13 directrice est mobile autour d'un axe transversal et d'un axe vertical. Les deux roulettes 13 directrices permettent entre autre de faciliter les manoeuvres du chariot 1.

Tel qu'illustré sur le détail de la figure 6, chaque roulette 13, 14 est boulonnée sur une plaque 32 solidaire du châssis 12. Chaque roulette 13 directrice est isolée au travers d'un tablier 33, ce tablier 33 étant vissé sur la plaque 32 associée à la roulette 13 directrice.

Selon le mode de réalisation illustré sur les figures, et notamment sur la figure 7, l'équipage 17 mobile est un assemblage de profilés aluminium ayant quatre rainures, ces profilés étant assemblés les uns par rapport aux autres, via des équerres 34 et des boulons 35 adaptés aux rainures des profilés.

Plus précisément, l'équipage 17 mobile comprend en l'occurrence une ceinture 36 rectangulaire avant présentant une paire de portants 37, ces portants 37 étant reliés transversalement au travers d'un barreau 38 inférieur et d'un barreau 39 supérieur. L'équipage 17 mobile comprend en outre un caisson 40 en saillie vers l'arrière du chariot 1, ce caisson 40 étant délimité latéralement via une lisse 41 supérieure et une lisse 42 inférieure en saillie par rapport au portant 37, ces lisses 41, 42 étant reliées verticalement par une jambe 43 arrière. Les lisses 41 supérieures et les lisses 42 inférieures sont respectivement reliées transversalement au moyen d'une poutrelle 44 supérieure et d'une poutrelle 45 inférieure. La poutrelle 44 supérieure et la poutrelle 45 inférieure sont reliées verticalement via une paire de jambes 46 centrales.

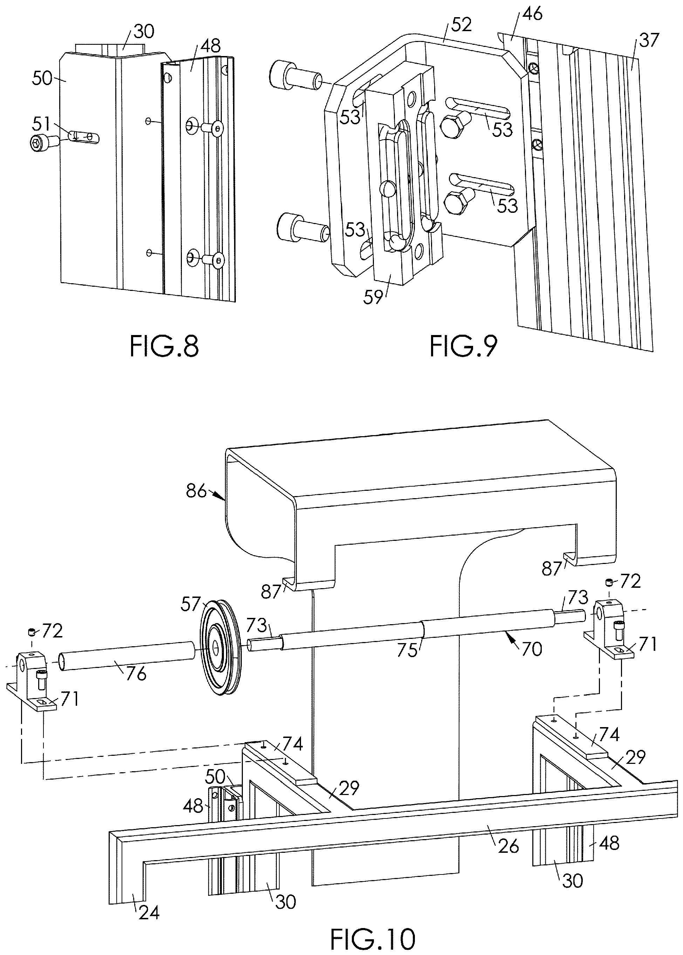

Selon le mode de réalisation illustré les figures, et notamment sur les figures 8 et 9, l'équipage 17 mobile est monté coulissant sur le cadre 15 au travers de deux guidages 47 linéaires à billes. Chaque guidage 47 linéaire comprend un rail 48 solidaire du cadre 15 au sein duquel coulissent deux patins 49 solidaires de l'équipage 17 mobile.

Plus précisément, afin de pouvoir régler l'écartement entre les rails 48, l'un des rails 48 est fixé le long de l'une des colonnes 30 du cadre 15 au travers d'une cornière 50, cette cornière 50 comprenant différents trous 51 oblongs pour permettre le réglage de l'écartement entre les deux rails 48. Chaque patin 49 est fixé sur l'une des jambes 46 centrales du caisson 40 au moyen d'une équerre 52, cette équerre 52 comprenant également différents trous 53 oblongs pour permettre des réglages des deux guidages 47 linéaires à billes lors du montage. Le fait d'avoir deux patins 49 par rail 48 permet de répartir les efforts et ainsi d'obtenir un déplacement fluide et naturel de l'équipage 17 mobile. L'équipage 17 mobile est stoppé, en partie basse, par deux butées 54 fin de course boulonnées sur la traverse 25 inférieure.

Selon le mode de réalisation illustré sur les figures, une poignée 18 est montée sur chaque jambe 43 arrière de l'équipage 17 mobile, ces poignées 18 permettant à l'opérateur de déplacer verticalement l'équipage 17 mobile, et également de déplacer le chariot 1.

L'équipage 17 mobile est équilibré verticalement via un dispositif 16 d'équilibre qui peut être par exemple un équilibreur de charge ou un système de rappel de charge.

Selon le mode de réalisation illustré sur les figures, l'équipage 17 mobile est équilibré via un équilibreur 16 de charge solidaire du châssis 12, cet équilibreur 16 comprenant un câble 55 ayant à son extrémité libre une boucle 56 manchonnée, le câble 55 étant guidé dans une partie supérieure du chariot 1 par une poulie 57 folle positionnée à l'aplomb de l'équilibreur 16 de charge. Un mousqueton 58 permet en l'occurrence de relier la boucle 56 manchonnée et une platine 59 boulonnée sur la poutrelle 44 supérieure de l'équipage 17 mobile. La capacité de l'équilibreur 16 de charge est choisie en fonction de la masse de l'élément 2 de caisse à manutentionner, à titre d'exemple pour un côté 2 d'habitacle la capacité de l'équilibreur 16 de charge se situe entre 15 et 25 kg. L'équilibreur 16 comprend en outre une butée 60 réglable solidaire du câble 55, cette butée 60 permettant de limiter, en partie haute, la course de l'équipage 17 mobile.

Plus précisément, l'équilibreur 16 est configuré de sorte que l'équipage 17 mobile, muni ou non du côté 2 d'habitable, occupe par défaut une position dite position référence (représentée sur la figure 1), cette position référence correspondant au contact entre la butée 60 et l'équilibreur 16.

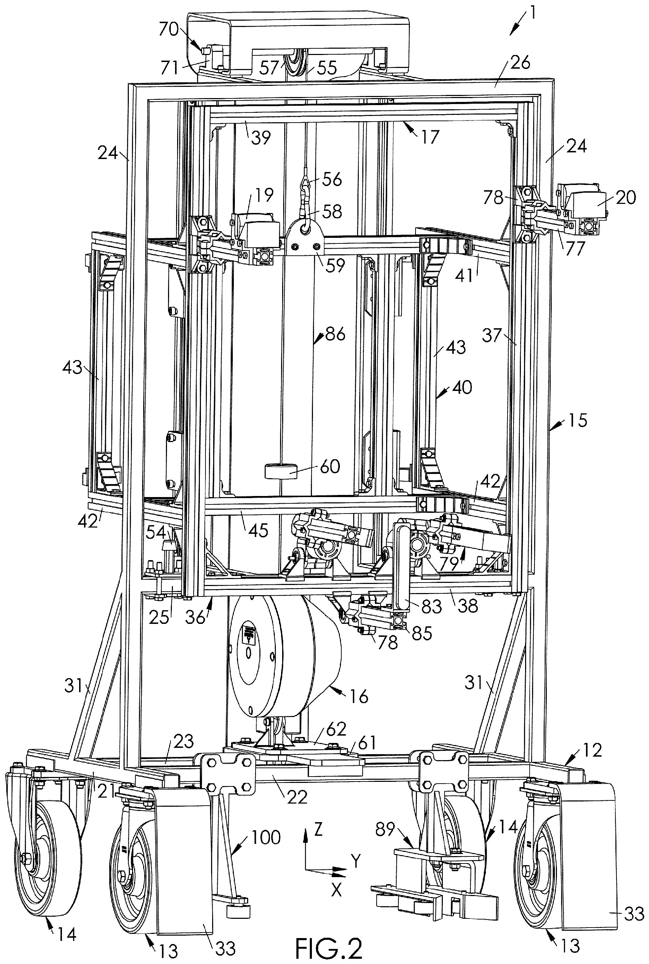

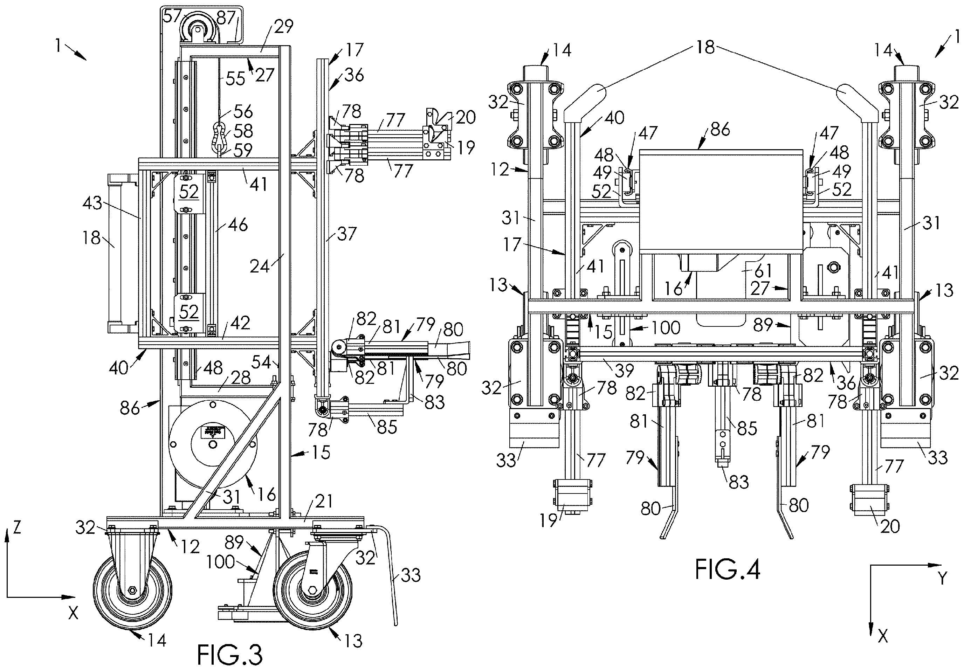

Ainsi, lorsque l'opérateur exerce un effort pour abaisser l'équipage 17 mobile, la butée 60 s'écarte de l'équilibreur 16 (figures 2 à 4). Inversement, lorsque l'opérateur n'exerce plus d'effort ou autrement dit relâche les poignées 18, l'équipage 17 mobile via l'équilibreur 16 retrouve sa position référence (figure 1). Cette configuration de l'équilibreur 16 est obtenue en majorant la masse du côté 2 d'habitacle. L'avantage de cette configuration est de dissocier le mouvement vertical de l'équipage 17 mobile en obligeant l'opérateur à exercer un effort pour déplacer verticalement l'équipage 17 mobile, et ainsi éviter tout déplacement nuisible de l'équipage 17 mobile lors du déplacement du chariot 1 par l'opérateur.

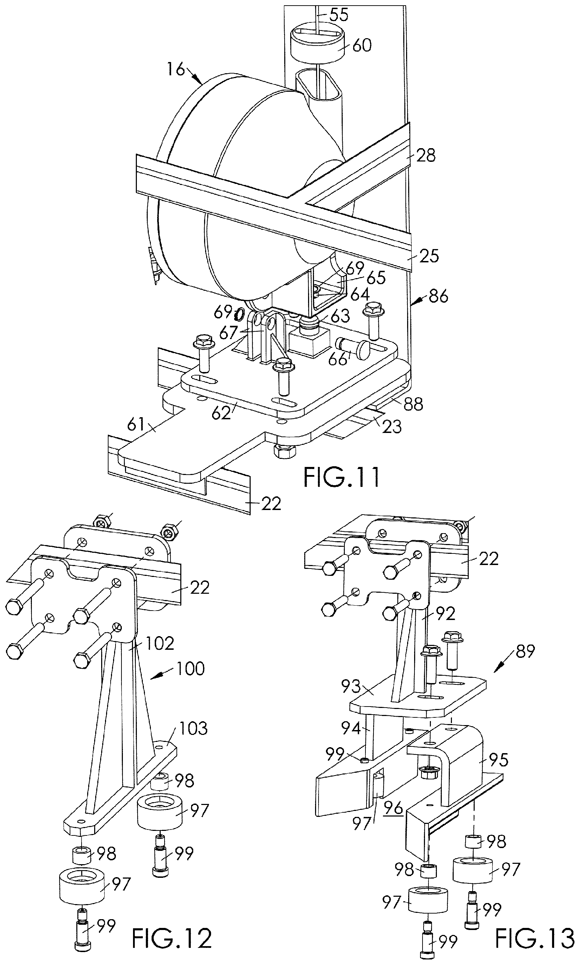

Selon l'exemple illustré sur les figures, et notamment sur la figure 11, l'équilibreur 16 est fixé sur un plateau 61 solidaire des barres 22, 23 avant et arrière du châssis 12 au moyen d'une base 62 boulonnée sur ce plateau 61. L'équilibreur 16 est assemblé sur la base 62 d'une part via un téton 63 faisant saillie de la base 62 placé au sein d'un alésage 64 réalisé dans un logement 65 de l'équilibreur 16 et d'autre part via un axe 66 épaulé traversant simultanément une chape 67 de la base 62 et une oreille 68 solidaire de l'équilibreur 16. L'équilibreur 16 et l'axe épaulé 66 sont arrêtés axialement par l'intermédiaire d'un circlips 69 externe.

Selon l'exemple illustré sur les figures et notamment sur la figure 10, la poulie 57 folle est montée sur un arbre 70, cet arbre 70 étant fixé à chaque extrémité sur un socle 71 en forme de T par l'intermédiaire du contact entre une vis 72 de pression et un méplat 73 réalisé sur l'extrémité de l'arbre 70. Chaque socle 71 est en l'occurrence vissé sur une lamelle 74 solidaire d'un doigt 29 supérieur du cadre 15. La poulie 57 folle est d'une part arrêtée axialement par un épaulement 75 réalisé sur l'arbre et d'autre part par une entretoise 76 positionnée entre la poulie 57 et l'un des socles 71.

Selon le mode de réalisation illustré sur les figures, chaque support 19, 20 est monté sur un portant 37 de la ceinture 36 via un bras 77 solidaire d'une articulation 78 simple, cette articulation 78 permettant de déplacer en rotation le bras 77 sur lequel est monté le support 19, 20 selon un axe de rotation sensiblement vertical. Le bras 77 est un profilé aluminium similaire à celui utilisé pour la structure de l'équipage 17 mobile. La forme du profilé ainsi que les moyens de fixation utilisés permettent de régler le support 19, 20 longitudinalement le long du bras 77 et verticalement via le déplacement de l'articulation 78 le long du portant 37. Afin d'éviter tout endommagement du côté 2 d'habitacle, les supports 19, 20 peuvent être réalisés en mousse rigide ou en caoutchouc.

Selon le mode de réalisation illustré sur les figures, le chariot 1 de manutention comprend une paire de butoirs 79 positionnés en vis-à-vis sur le barreau 38 inférieur, chaque butoir 79 comprenant une branche 80 boulonnée à une extrémité sur une patte 81. Chaque patte 81 est en l'occurrence solidaire du barreau 38 inférieur via une jointure 82 ayant deux axes de rotation perpendiculaires, cette jointure 82 permettant de régler le positionnement dans l'espace de la branche 80. Chaque branche 80 est à son extrémité libre coudée vers l'extérieur du chariot 1 de sorte à former une zone convergente apte à faciliter l'introduction du pied 11 central entre les butoirs 79. Le fait que le pied 11 central soit compris entre les butoirs 79 lors de la manutention permet d'éviter tout basculement latéral du côté 2 d'habitacle. La patte 81 est un profilé aluminium similaire à celui utilisé pour la structure de l'équipage 17 mobile, chaque branche 80 étant ainsi réglable longitudinalement le long de chaque patte 81 et transversalement via le déplacement de la jointure 82 le long du barreau 38 inférieur.

Selon le mode de réalisation illustré sur les figures, le chariot 1 comprend en outre un tampon 83 apte à venir en contact avec une surface 84 externe du pied 11 central, ce tampon 83 permettant d'éviter que l'élément 2 de caisse ne vienne heurter la partie inférieure du chariot 1 lors de sa manutention. Le tampon 83 est monté sur le barreau 38 inférieur via une béquille 85 solidaire d'une articulation simple, cette articulation permettant en l'occurrence de déplacer en rotation la béquille 85 selon un axe sensiblement transversal. La béquille 85 se présente également sous la forme d'un profilé similaire à celui utilisé pour la structure de l'équipage 17 mobile, chaque tampon 83 étant ainsi réglable longitudinalement le long de la béquille 85 et transversalement via le déplacement de l'articulation le long du barreau 38 inférieur.

Selon l'exemple illustré sur les figures, et notamment sur les figures 10 et 11, un carter 86 de protection est mis en place afin d'isoler l'équilibreur 16 et l'équipage 17 mobile de l'opérateur, ce carter 86 étant fixé d'une part par l'intermédiaire de deux griffes 87 sur les doigts 29 supérieures du cadre 15 et d'autre part par l'intermédiaire d'une aile 88 sur le plateau 61 solidaire du châssis 12.

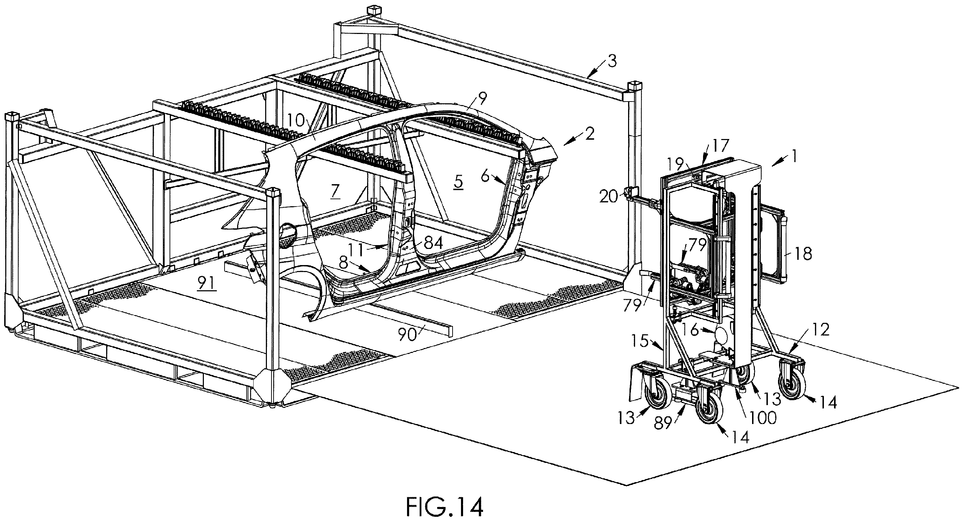

Selon le mode de réalisation illustré sur les figures, et notamment sur la figure 14 à 17, le chariot 1 comprend un dispositif 89 de guidage primaire, ce dispositif 89 de guidage primaire étant apte à coopérer avec un rail 90 primaire placé sur un plancher 91 d'un conteneur 3. Ainsi, la position du chariot 1 est contrainte par rapport au conteneur 3 au sein duquel l'opérateur doit prélever un côté 2 d'habitacle.

Plus précisément, tel qu'illustré sur la figure 13, le dispositif 89 de guidage primaire comprend une embase 92 verticale, cette embase 92 étant, dans une portion supérieure, boulonnée sur la barre 22 avant, et dans une portion inférieure solidaire d'une table 93 sensiblement horizontale. Le dispositif 89 de guidage comprend en outre une cloison 94 fixe faisant saillie de la table 93 et une cloison 95 réglable en regard par rapport à cette cloison 94 fixe, ces cloisons 94, 95 définissant avec la table 93 un couloir 96 apte à recevoir le rail 90 primaire lors d'un prélèvement d'un côté 2 d'habitacle au sein du conteneur 3. Afin de faciliter le déplacement du dispositif 89 de guidage primaire, chaque cloison 94, 95 comprend, dans sa partie inférieure, deux galets 97 uniformément répartis faisant saillie partiellement au sein du couloir 96, chaque galet 97 étant monté au travers d'une entretoise 98 et d'une vis 99 épaulée de sorte que celui-ci soit libre en rotation autour de la vis 99.

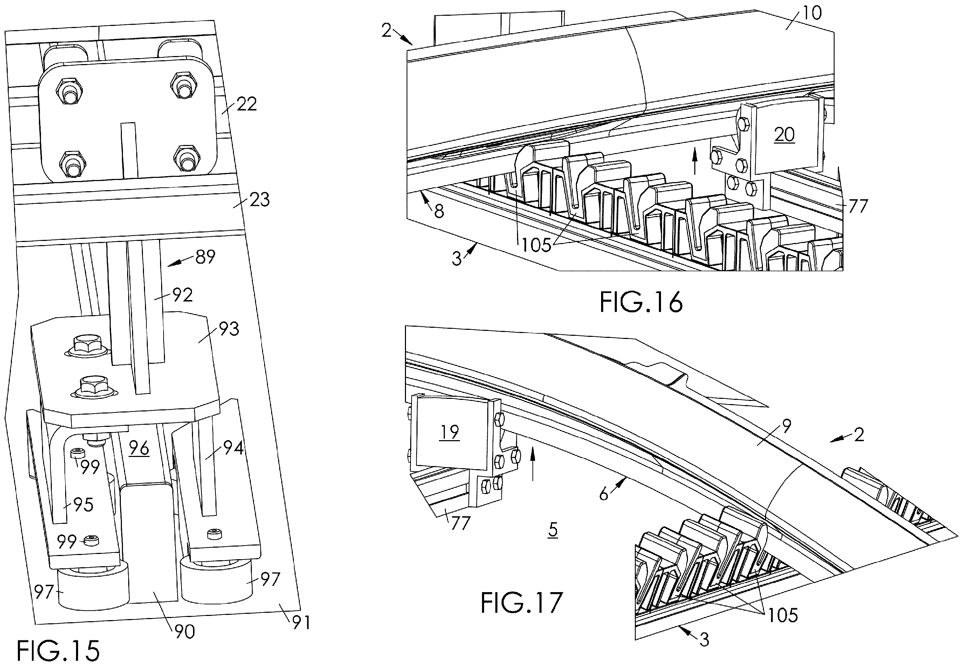

Tel qu'illustré sur la figure 15, le rail 90 primaire est ici une poutre 90 de section rectangulaire.

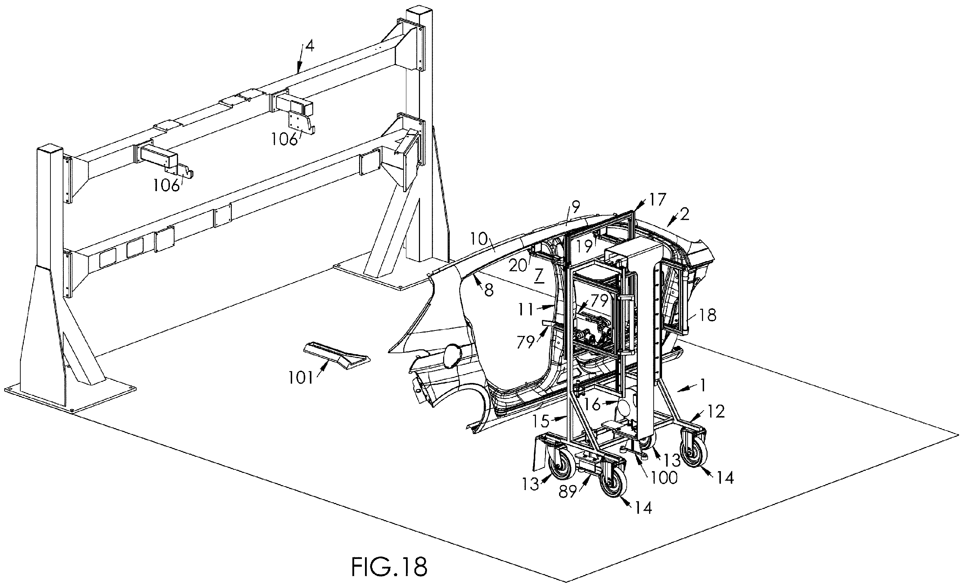

Selon le mode de réalisation illustré sur les figures, et notamment sur les figures 18 à 21, le chariot 1 comprend un dispositif 100 de guidage secondaire, ce dispositif 100 étant apte à coopérer avec un rail 101 secondaire placé sur un poste 4 de chargement. Ainsi, la position du chariot 1 est contrainte par rapport au poste 4 de chargement sur lequel l'opérateur va déposer le côté 2 d'habitacle.

Plus précisément, tel qu'illustré sur la figure 12, le dispositif 100 de guidage secondaire comprend un pied 102 vertical, ce pied 102 étant dans une portion supérieure, boulonné sur la barre 22 avant, et dans une portion inférieure solidaire d'une lame 103 longitudinale sensiblement perpendiculaire au pied 102. Le dispositif 100 de guidage secondaire comprend en outre deux galets 97 positionnés à chaque extrémité de la lame 103, chaque galet 97 étant monté au travers d'une entretoise 98 et d'une vis 99 épaulée de sorte que celui-ci soit libre en rotation autour de la vis 99.

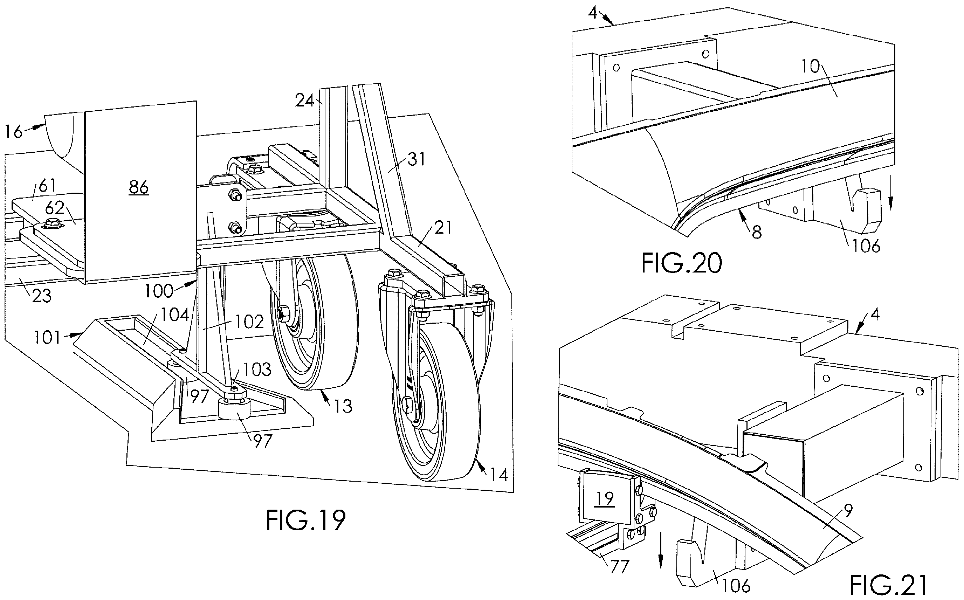

Tel qu'illustré sur la figure 19, le rail 101 secondaire comprend une entaille 104 apte à recevoir les galets 97 du dispositif 100 de guidage secondaire.

Les côtés 2 d'habitacle sont rangés dans le conteneur 3 dans une position sensiblement homogène. Ainsi, le fait de contraindre le chariot 1 par rapport au conteneur 3 et au poste 4 de chargement permet de positionner le côté 2 d'habitacle sur le poste 4 de chargement dans une position désirée, sans avoir à faire de manipulations supplémentaires.

Dans la suite de la description, nous décrirons une opération dans laquelle l'opérateur prélève, au moyen du chariot 1 de manutention, un côté 2 d'habitacle stocké au sein d'un conteneur 3 puis le dépose sur un poste 4 de chargement.

Premièrement, tel qu'illustré sur les figures 14 à 17, l'opérateur prélève un côté 2 d'habitacle, et pour cela il réalise les étapes suivantes:
- abaissement de l'équipage 17 mobile;
- orientation du chariot 1 par rapport au conteneur 3 en plaçant le rail 90 primaire au sein du couloir 96 du dispositif 89 de guidage primaire (figure 15);
- positionnement du support 19 primaire et du support 20 secondaire en regard respectivement de la limite 9 supérieure et de la bordure 10 supérieure au travers de l'encadrement 6 primaire et de l'encadrement 8 secondaire;
- libération de l'équipage 17 mobile pour extraire le côté 2 d'habitacle d'empreintes 105 du conteneur 3 (représentée par les flèches sur figures 16 et 17), l'équipage 17 mobile retrouvant sa position référence;
- retrait du chariot 1 sur lequel repose le côté 2 d'habitacle.

Deuxièmement, l'opérateur déplace le chariot 1 jusqu'au poste 4 de chargement.

Troisièmement, tel qu'illustré sur les figures 18 à 21, l'opérateur dépose le côté 2 d'habitacle sur le poste 4 de chargement, et pour cela il réalise les étapes suivantes:
- orientation du chariot 1 par rapport au poste 4 de chargement en plaçant les galets 97 du dispositif 100 de guidage secondaire au sein de l'entaille 104 du rail 101 secondaire (figure 19);
- positionnement de la bordure 10 supérieure et de la limite 9 supérieure du côté 2 d'habitacle en regard de crochets 106 du poste 4 de chargement;
- abaissement de l'équipage 17 mobile de sorte à déposer le côté 2 d'habitacle sur les crochets 106 (représenté par les flèches sur les figures 20 et 21);
- retrait du chariot 1 ;
- libération de l'équipage 17 mobile, celui retrouvant sa position référence.

Le chariot 1 de manutention qui vient d'être décrit offre les avantages suivants.

D'une part, le chariot 1 de manutention permet de déplacer aisément un côté 2 d'habitacle et plus généralement un élément 2 de caisse volumineux, fragile, coupant et ayant une masse importante au bénéfice de la productivité. En effet, une fois prélevé, le côté 2 d'habitacle est immobilisé sur l'équipage 17 mobile. Ainsi, l'opérateur n'a plus qu'à déplacer l'ensemble, par l'intermédiaire des poignées 18, jusqu'au poste 4 de chargement, en prenant soin d'éviter les différents obstacles situés sur son parcours. Le fait de contraindre la position du chariot 1 par rapport au conteneur 3 et au poste 4 de chargement, par l'intermédiaire des dispositifs 89, 100 de guidage primaire et secondaire, permet de positionner le côté 2 d'habitacle dans la position désirée sur le poste 4 de chargement et ainsi d'éviter des manipulations supplémentaires.

D'autre part, l'emploi d'un chariot 1 de manutention permet à l'opérateur de travailler dans des conditions de travail appropriées, et en l'occurrence ergonomique. En effet, tout au long de la manutention, l'opérateur n'est pas en contact avec le côté 2 d'habitacle. Ainsi, le risque de blessures par contact avec le côté 2 d'habitacle est minime. En outre, pour manutentionner le côté 2 d'habitacle, l'opérateur réalise une seule étape à la fois.

Enfin, le chariot 1 de manutention est modulable et polyvalent. En effet, il est possible d'adapter l'équilibreur 16, les supports 19, 20, les butoirs 79 et le tampon 83 à l'élément 2 de caisse à manutentionner. Il est également possible d'ajouter de nouveaux supports, grâce notamment à la structure de l'équipage 17 mobile.

## Revendications

1. Chariot (1) de manutention apte à déplacer un élément (2) de caisse comprenant une ouverture (5) primaire délimitée par un encadrement (6) primaire, ce chariot (1) comprenant:
- un châssis (12) sur lequel sont montées au moins une roulette (13) directrice et une roulette (14) fixe ;
- un cadre (15) vertical solidaire du châssis (12) et sensiblement perpendiculaire à celui-ci ;
- un équipage (17) mobile monté coulissant sur le cadre (15) l'équipage (17) mobile comprenant :
- des poignées (18) ;
- un support (19) primaire apte à recevoir l'élément (2) de caisse à travers l'encadrement (6) primaire.
**caractérisé en ce qu'**il comprend:
- un dispositif (16) d'équilibre solidaire du châssis (12);
et relié à l'équipage 17.

2. Chariot (1) selon la revendication 1, **caractérisé en ce qu'**il comprend un support (20) secondaire apte à recevoir l'élément (2) de caisse à travers un encadrement (8) secondaire.

3. Chariot (1) selon l'une quelconque des revendications précédentes, **caractérisé en ce qu'**il comprend un dispositif (89) de guidage primaire apte à venir coopérer avec un rail (90) primaire.

4. Chariot (1) selon l'une quelconque des revendications précédentes, **caractérisé en ce que** l'équipage (17) mobile est monté coulissant sur le cadre (15) au travers de deux guidages (47) linéaires à billes, chaque guidage (47) linéaire comprenant un rail (48) solidaire du cadre (15) au sein duquel coulisse un patin (49) solidaire de l'équipage (17) mobile.

5. Chariot (1) selon l'une quelconque des revendications précédentes, **caractérisé en ce que** le dispositif (16) d'équilibre comprend un câble (55) ayant une boucle (56) à son extrémité libre, ce câble (55) étant guidé par une poulie (57) et relié à l'équipage (17) mobile via la boucle (56).

6. Chariot (1) selon l'une quelconque des revendications précédentes, **caractérisé en ce qu'**il comprend une paire de butoirs (79) positionnés en vis-à-vis sur l'équipage (17) mobile.

7. Chariot (1) selon l'une quelconque des revendications précédentes, **caractérisé en ce qu'**il comprend un tampon (83) apte à venir en contact avec l'élément (2) de caisse.

8. Chariot (1) selon l'une quelconque des revendications précédentes, **caractérisé en ce que** le dispositif (16) d'équilibre est un équilibreur de charge ou un système de rappel de charge.

## Patentansprüche

1. Transportwagen (1), der imstande ist, ein Karosserieelement (2) zu transportieren, das eine durch eine primäre Einrahmung (6) begrenzte primäre Öffnung (5) umfasst, wobei dieser Wagen (1) Folgendes umfasst:
- einen Rahmen (12), an dem mindestens eine Lenkrolle (13) und eine feststehende Rolle (14) montiert sind;
- ein vertikales Rahmenwerk (15), das mit dem Rahmen (12) fest verbunden ist und im Wesentlichen senkrecht dazu steht;
- eine bewegliche Vorrichtung (17), die verschiebbar am Rahmenwerk (15) montiert ist, wobei die bewegliche Vorrichtung (17) Folgendes umfasst:
- Griffe (18);
- einen primären Halter (19), der imstande ist, das Karosserieelement (2) durch die primäre Einrahmung (6) hindurch aufzunehmen,
**dadurch gekennzeichnet, dass** er Folgendes umfasst:
- eine Gegengewichtsvorrichtung (16), die mit dem Rahmen (12) fest verbunden und an der Vorrichtung 17 befestigt ist.

2. Wagen (1) nach Anspruch 1, **dadurch gekennzeichnet, dass** er eine sekundäre Halterung (20) umfasst, die imstande ist, das Karosserieelement (2) durch eine sekundäre Einrahmung (8) hindurch aufzunehmen.

3. Wagen (1) nach einem der vorstehenden Ansprüche, **dadurch gekennzeichnet, dass** er eine primäre Führungsvorrichtung (89) umfasst, die imstande ist, mit einer primären Schiene (90) zusammenzuwirken.

4. Wagen (1) nach einem der vorstehenden Ansprüche, **dadurch gekennzeichnet, dass** die bewegliche Vorrichtung (17) durch zwei Kugel-Linearführungen (47) verschiebbar am Rahmenwerk (15) montiert ist, wobei jede Linearführung (47) eine mit dem Rahmenwerk (15) fest verbundene Schiene (48) umfasst, in der sich ein mit der beweglichen Vorrichtung (17) fest verbundenes Gleitelement (49) bewegt.

5. Wagen (1) nach einem der vorstehenden Ansprüche, **dadurch gekennzeichnet, dass** die Gegengewichtsvorrichtung (16) ein Kabel (55) umfasst, das eine Schlaufe (56) an seinem freien Ende aufweist, wobei das Kabel (55) durch eine Rolle (57) geführt und durch die Schlaufe (56) mit der beweglichen Vorrichtung (17) verbunden ist.

6. Wagen (1) nach einem der vorstehenden Ansprüche, **dadurch gekennzeichnet, dass** er ein Paar von Anschlägen (79) umfasst, die einander gegenüberliegend an der beweglichen Vorrichtung (17) angeordnet sind.

7. Wagen (1) nach einem der vorstehenden Ansprüche, **dadurch gekennzeichnet, dass** er einen Puffer (83) umfasst, der imstande ist, mit dem Karosserieelement (2) in Kontakt zu kommen.

8. Wagen (1) nach einem der vorstehenden Ansprüche, **dadurch gekennzeichnet, dass** die Gegengewichtsvorrichtung (16) ein Lastausgleich oder ein System zur Lastrückführung ist.

## Claims

1. Handling trolley (1) capable of moving a case element (2) comprising a primary opening (5) defined by a primary frame (6), this trolley (1) comprising:
- a chassis (12) whereon are assembled at least one directing caster (13) and a secured caster (14);
- a vertical frame (15) secured to the chassis (12) and substantially perpendicular to it;
- a mobile piece of equipment (17) assembled sliding on the frame (15) the mobile piece of equipment (17) comprising:
- handles (18);
- a primary support (19) capable of receiving the case element (2) through the primary frame (6),
**characterised in that** it comprises:
- a balancing device (16) secured to the chassis (12);
and connected to the equipment 17.

2. Trolley (1) according to claim 1, **characterised in that** it comprises a secondary support (20) capable of receiving the case element (2) through a secondary frame (8);

3. Trolley (1) according to any one of the preceding claims, **characterised in that** it comprises a primary guide device (89) capable of cooperating with a primary rail (90).

4. Trolley (1) according to any one of the preceding claims, **characterised in that** the mobile piece of equipment (17) is assembled sliding on the frame (15) through two linear ball bearing guides (47), each linear guide (47) comprising a rail (48) secured to the frame (15) within which slides a runner (49) secured to the mobile piece of equipment (17).

5. Trolley (1) according to any one of the preceding claims, **characterised in that** the balancing device (16) comprises a cable (55) having a loop (56) at the free end thereof, this cable (55) being guided by a pulley (57) and connected to the mobile piece of equipment (17) via the loop (56).

6. Trolley (1) according to any one of the preceding claims, **characterised in that** it comprises a pair of stoppers (79) positioned opposite each other on the mobile piece of equipment (17).

7. Trolley (1) according to any one of the preceding claims, **characterised in that** it comprises a buffer (83) capable of coming into contact with the case element (2).

8. Trolley (1) according to any one of the preceding claims, **characterised in that** the balancing device (16) is a load balancer or a load-sensing system.
